# EUROPÄISCHE PATENTANMELDUNG

(11) **EP 3 311 640 A1**
(43) Veröffentlichungstag der Anmeldung: **25.04.2018**
(21) Anmeldenummer: 17189031.2
(22) Anmeldetag: 01.09.2017
(51) Int. Cl.: A01B 59/06, A01B 63/02, A01B 63/114

(54) **ANHÄNGEVORRICHTUNG FÜR EIN LANDWIRTSCHAFTLICHES ZUGFAHRZEUG UND EIN VERFAHREN ZU DEREN BETRIEB**

(30) Priorität: 20.10.2016 DE 102016120034
(71) Anmelder: Aunkofer, Franz, 93326 Abensberg (DE)
(72) Erfinder: Aunkofer, Franz, 93326 Abensberg (DE)
(74) Vertreter: Benninger, Johannes

(57) **Zusammenfassung**

Es ist eine Anhängevorrichtung (10) für ein landwirtschaftliches Zugfahrzeug (20), das front- und/oder heckseitig mit einer hydraulischen Dreipunkt-Hebevorrichtung (12) ausgestattet ist, offenbart. Die Anhängevorrichtung (10) umfasst eine erste Anhängerkupplung (14), welche einen Trägerrahmen (18) an das Zugfahrzeug (20) koppelt, sowie eine dem Trägerrahmen (18) zugeordnete zweite Anhängerkupplung (16) für ein Arbeitsgerät. Die zweite Anhängerkupplung (16) ist mittels zumindest eines Stellelements gegenüber dem Zugfahrzeug (20) zumindest teilweise entlang der Längserstreckungsrichtung des Trägerrahmens (18) relativ verschiebbar.

Bei einer zumindest teilweisen oder vollständig abgesenkten hydraulischen Dreipunkt-Hebevorrichtung (12) wird eine mechanische Verbindung zwischen der ersten Anhängerkupplung (14) und dem Zugfahrzeug (20) gebildet.

Außerdem ist ein Verfahren zum Anhängen eines landwirtschaftlichen Arbeitsgeräts an einem Zugfahrzeug (20) offenbart.

## Beschreibung

Die vorliegende Erfindung betrifft eine Anhängevorrichtung für ein landwirtschaftliches Zugfahrzeug gemäß den Merkmalen des unabhängigen Anspruchs 1 sowie ein Verfahren zum Anhängen eines landwirtschaftlichen Arbeitsgeräts an ein Zugfahrzeug gemäß den Merkmalen des unabhängigen Verfahrensanspruchs 12.

Aufgrund unterschiedlicher Bodenverhältnisse und/oder Beschaffenheiten eines zu bearbeitenden landwirtschaftlich genutzten Bodens ist ein spurversetztes Fahren von landwirtschaftlichen Arbeitsgeräten gegenüber dem ziehenden landwirtschaftlichen Zugfahrzeug häufig sinnvoll. Dies kann insbesondere dann sinnvoll sein, wenn das Zugfahrzeug die bereits vorhandene Fahrspur im Feld möglichst beibehalten und nicht verlassen soll, insbesondere wenn der zu bearbeitende Boden bspw. links und/oder rechts vom Zugfahrzeug schwer zugänglich ist und/oder ein Gefälle aufweist und/oder der Boden links und/oder rechts vom Zugfahrzeug lediglich vom Arbeitsgerät befahren werden soll. Das spurversetzte Fahren ermöglicht damit einen größeren Bearbeitungsradius unabhängig von der Fahrspur des Zugfahrzeuges sowie eine größere Flexibilität bei der Bodenbearbeitung und/oder Feldbestellung mit unterschiedlichen gezogenen Arbeitsgeräten.

Durch DE 28 02 83 U1 ist ein Anbaugerät für einen Kleinschlepper offenbart. An einem Arbeitsrahmen kann ein Arbeitsgerät in Form eines Kreiselmähwerks befestigt sein, welcher Arbeitsrahmen quer zur Fahrtrichtung des Schleppers bewegbar ist.

Durch EP 2 283 719 A1 ist eine Anordnung zur seitlichen verstellbaren Anbringung eines landwirtschaftlichen Arbeitsgeräts an einem Fahrzeug offenbart. Die Anordnung umfasst ein erstes Element, das an einer Dreipunktkupplung des Zugfahrzeuges anbringbar ist, und ein zweites Element, das mittels eines Stellelements gegenüber dem ersten Element in einer horizontalen und quer zur Vorwärtsrichtung verlaufenden Richtung verschiebbar gelagert ist. Sowohl das erste Element als auch das zweite Element sind jeweils durch einen rechteckigen Rahmen mit vertikalen Streben und horizontalen Streben gebildet, die an rechteckigen oder abgerundeten Ecken miteinander verbunden sind. Dabei ist das erste Element breiter als das zweite Element. Zur Verschiebung des zweiten Elements gegenüber dem ersten Element, ist die untere und obere horizontale Strebe eines der Elemente mit einem Abschnitt verbunden, der jeweils eine an der unteren und oberen horizontalen Strebe angebrachte Halterung des anderen Elements umgreift.

Zur Koppelung des ersten Elements an das Zugfahrzeug ist an dessen oberen Strebe eine Aufnahme für einen Oberlenker-Koppelpunkt eines Oberlenkers und an dessen unteren Strebe des ersten Elements zwei untere Laschen und Bolzen zur Anbringung eines Unterlenker-Koppelpunkt eines Unterlenkers vorgesehen. Darüber hinaus umfasst das zweite Element eine untere, sich horizontal und quer zur Vorwärtsrichtung erstreckende, feststehende Schiene, an der diverse Elemente, wie beispielsweise ein oder mehrere Unterlenker-Koppelpunkte, eine Kugelkopfkupplung, ein Zugmaul, ein Zugpendel und/oder eine Ackerschiene angeordnet sein können.

Die beschriebene Anordnung hat sich jedoch in der Praxis in vielen Einsatzsituationen als nachteilig erwiesen, da diese nicht tauglich für angehängte Geräte ist, weil die Zapfwelle des Zugfahrzeuges während einer Feldfahrt und/oder bei einer Kurvenfahrt mit dem Rahmen kollidiert. Da darüber hinaus das zweite Element gegenüber dem ersten Element relativ verschiebbar ist, wirken beispielsweise bei einer Kurvenfahrt auf das verschobene zweite Element deutlich größere Kräfte als auf das erste Element, was zwangsläufig zu einem weniger stabilen System führt.

Durch DE 10 2010 046 269 A1 ist eine Vorrichtung zum seitlichen Verschieben von angetriebenen Arbeitsgeräten an der Schlepper-Dreipunkt-Hydraulik offenbart. Ein Anbauraumen ist an einer Dreipunkt-Hydraulik eines Schleppers vorgesehen, wobei der Anbaurahmen einen seitlich verschiebbaren Verschieberahmen zum Anbau handelsüblicher angetriebener Anbaugeräte sowohl am Heck als auch an der Front umfasst.

Bei den im Stand der Technik bekannten Lösungen hat es sich als nachteilig erwiesen, dass während einer Feldfahrt große Kräfte auf die Anhängevorrichtung wirken, wodurch die belasteten Elemente, insbesondere die hydraulischen Elemente einer hydraulischen Dreipunkt-Hebevorrichtung, ausgeprägtem Verschleiß ausgesetzt werden können. Darüber hinaus mangelt es den bekannten Lösungen an einer technischen Zulassung des an das Zugfahrzeug angehängten Arbeitsgeräts für den Straßenverkehr.

Der Erfindung liegt die Aufgabe zugrunde, eine Anhängevorrichtung zur Verfügung zu stellen, welche die seitliche Verschiebbarkeit und damit ein spurversetztes Fahrzeug von einem Arbeitsgeräts gegenüber dem Zugfahrzeug ermöglicht, und welche zugleich starr an das Zugfahrzeug koppelbar ist. Gleichzeitig sollen die Kosten gesenkt und der Wartungsaufwand reduziert werden.

Diese Aufgaben werden durch eine Anhängevorrichtung für ein landwirtschaftliches Arbeitsgerät mit den Merkmalen des unabhängigen Anspruchs 1 sowie durch ein Verfahren zum Anhängen eines landwirtschaftlichen Arbeitsgeräts an einer Anhängevorrichtung mit den Merkmalen des unabhängigen Verfahrensanspruchs 12 gelöst.

Zur Lösung der genannten Aufgaben schlägt die Erfindung eine Anhängevorrichtung für ein landwirtschaftliches Zugfahrzeug vor, das front- und/oder heckseitig mit einer hydraulischen Dreipunkt-Hebevorrichtung ausgestattet ist. Bei der hydraulischen Dreipunkt-Hebevorrichtung handelt es sich um eine herkömmliche im Stand der Technik bekannte Dreipunkt-Hebevorrichtungen, welche sich aus zwei Unterlenkern und aus einem Oberlenker zusammensetzen. Ein Oberlenker zur Anhängevorrichtung ist jedoch nicht zwingend erforderlich, um die Vorteile der Anhängevorrichtung nutzen zu können.

Die Anhängevorrichtung umfasst eine erste Anhängerkupplung mit einem Trägerrahmen, wobei diese erste Anhängerkupplung den Trägerrahmen lösbar an das Zugfahrzeug koppelt. Die erste Anhängerkupplung kann an bereits bekannte und vorhandene Bauteile, insbesondere an einem Kupplungskopf, des Zugfahrzeuges gekuppelt werden. Der Trägerrahmen kann über die erste Anhängerkupplung an dem Zugfahrzeug zentral angeordnet werden. Wahlweise kann der Trägerrahmen dezentral über die erste Anhängerkupplung an das Zugfahrzeug befestigt werden, wobei ein Kupplungskopf entsprechend dezentral und korrespondierend zur ersten Anhängerkupplung am Zugfahrzeug angeordnet ist. Die erste Anhängerkupplung kann an einem Rahmen vorgesehen sein, welcher mit dem Trägerrahmen verbunden ist. Bei dem Rahmen und dem Trägerrahmen kann es sich um eine bauliche Einheit handeln, welche einstückig ausgebildet ist. Dadurch kann eine Anhängevorrichtung geschaffen werden, welche kompakt gebaut ist und insbesondere die bei einer Feldfahrt und/oder Straßenfahrt auftretenden Kräfte gut kompensieren kann. Wahlweise kann es sich bei dem Rahmen und dem Trägerrahmen um zwei baulich getrennte Einheiten handeln, die miteinander verbindbar sind.

Der Trägerrahmen kann sich zumindest teilweise und/oder vollständig über die Breite des Zugfahrzeuges erstrecken und horizontal zur Fahrtrichtung des Zugfahrzeugs angeordnet sein.

Je nach Anforderung kann der Trägerrahmen breiter als das Zugfahrzeug ausgebildet sein, so dass der Trägerrahmen jeweils seitlich links und rechts des Zugfahrzeuges übersteht. Insbesondere kann der Trägerrahmen gegenüber dem Rahmen zumindest gleichbreit, vorzugsweise jedoch breiter ausgebildet sein. Der Trägerrahmen kann sogenannte Ausleger ausbilden. Bei dieser Ausführungsform kann der Trägerrahmen ein Gelenk oder mehrere Gelenke umfassen, wobei dem einen Gelenk oder den mehreren Gelenken Mittel zum Verschwenken der Ausleger des Trägerrahmens zugeordnet sein können. Als Mittel zum Verschwenken können hydraulische und/oder pneumatische Stellelemente oder dergleichen vorgesehen sein, wahlweise auch elektromotorisch betriebene Stellelemente oder anderweitig angetriebene Stellelemente. Der Trägerrahmen kann damit für eine Straßenfahrt zusammengeklappt werden, um die Anforderungen im Straßenverkehr hinsichtlich einer zulässigen Breite erfüllen zu können.

Der Trägerrahmen und der Rahmen sind mit der hydraulischen Dreipunkt-Hebevorrichtung des Zugfahrzeugs verbunden, wobei die zwei Unterlenker an den Trägerrahmen und der Oberlenker an den Rahmen gekoppelt sein können. Mittels der hydraulischen Dreipunkt-Hebevorrichtung kann zwischen einer Arbeits- und Transportstellung des Trägerrahmens gewechselt werden.

Die Anhängevorrichtung umfasst eine dem Trägerrahmen zugeordnete zweite Anhängerkupplung für ein Arbeitsgerät, bspw. Anhänger, Güllewagen, Bodenbearbeitungsgerät, Saatguttank, Düngertank, Frontseilwinde oder dergleichen, sowie für sämtliche weitere im Stand der Technik bekannte Arbeitsgeräte. Statt der zweiten Anhängevorrichtung können auch weitere Kupplungselemente wie Fanghaken und/oder Zugmaul oder dergleichen am Trägerrahmen angeordnet sein. Die zweite Anhängerkupplung ist mittels zumindest eines Stellelements gegenüber dem Zugfahrzeug zumindest teilweise entlang der Längserstreckungsrichtung des Trägerrahmens und damit in einer Richtung quer zu einer Fahrtrichtung des Zugfahrzeuges relativ verschiebbar. Die zweite Anhängerkupplung und das angehängte Arbeitsgerät können gegenüber dem Zugfahrzeug spurversetzt bzw. seitlich versetzt zueinander eingestellt werden, wobei das spurversetzte Fahren abhängig von einer Stellbewegung des zumindest einen Stellelements ist.

Wahlweise können auch zumindest zwei Stellelemente oder mehr als zwei Stellelemente vorgesehen sein, die jeweils eine Verschiebung der zweiten Anhängerkupplung entlang der Längserstreckungsrichtung des Trägerrahmens bewirken können.

Die Breite des Trägerrahmens kann einen maximalen Verschiebeweg der zweiten Anhängerkupplung vorgeben. Die zweite Anhängerkupplung und das Zugfahrzeug können maximal zueinander versetzt angeordnet sein, wobei das zumindest eine Stellelement eine Stellbewegung um einen definierten Soll-Wert vorgibt. Wahlweise können die zweite Anhängerkupplung und das Zugfahrzeug leicht zueinander versetzt angeordnet sein, wobei das zumindest eine Stellelement eine Stellbewegung um einen definierten Soll-Wert vorgibt.

Die Erfindung sieht weiter vor, dass bei einer zumindest teilweisen oder vollständig abgesenkten hydraulischen Dreipunkt-Hebevorrichtung eine starre mechanische Verbindung zwischen der ersten Anhängerkupplung und dem Zugfahrzeug ausgebildet wird. Bei einer zumindest teilweisen oder vollständig abgesenkten hydraulischen Dreipunkt-Hebevorrichtung kann sich der Trägerrahmen in einer Arbeitsposition befinden, welche insbesondere bei einer Feldfahrt erforderlich ist.

Diese mechanische Verbindung kann sich in Form von einem starren vierten Verbindungspunkt auszeichnen oder durch einen solchen starren vierten Verbindungspunkt gebildet sein, wobei größtenteils keine oder lediglich eine geringe Belastung von hydraulischen Elementen der hydraulischen Dreipunkt-Hebevorrichtung erfolgt. Eine zumindest teilweise abgesenkte hydraulische Dreipunkt-Hebevorrichtung kann sich gegenüber der vollständig abgesenkten hydraulischen Dreipunkt-Hebevorrichtung dahingehend auszeichnen, dass bereits in einem etwas höheren Zustand eine mechanische Verbindung zwischen der ersten Anhängerkupplung und dem Zugfahrzeug auch Bereich ausgebildet wird, was die Flexibilität der Handhabbarkeit der Anhängevorrichtung erhöht. Aufgrund des erfindungsgemäßen Gegenstandes kann ein landwirtschaftliches Arbeitsgerät spurversetzt zu einem Zugfahrzeug gefahren werden, während das Arbeitsgerät zugleich über den Trägerrahmen an die hydraulische Dreipunkt-Hebevorrichtung und insbesondere über die erste Anhängerkupplung gekoppelt ist.

Eine Weiterbildung der Erfindung kann vorsehen, dass die erste Anhängerkupplung bei einer zumindest teilweisen oder abgesenkten hydraulischen Dreipunkt-Hebevorrichtung auf einem Kupplungskopf des Zugfahrzeuges aufliegt. Die erste Anhängerkupplung kann den Kupplungskopf des Zugfahrzeuges zumindest vollständig umgreifen, wodurch eine mechanische Verbindung ausgebildet wird. Es kann mindestens ein Sicherungsmittel vorgesehen sein, welches die Verbindung zwischen der ersten Anhängerkupplung und den Kupplungskopf des Zugfahrzeuges bei einer zumindest teilweisen oder vollständig abgesenkten hydraulischen Dreipunkt-Hebevorrichtung sichert. Bei dem mindestens einen Sicherungsmittel kann es sich um im Stand der Technik bekannte Lösungen zur Sicherung von Anhängerkupplungen an einem Kupplungskopf handeln. Die Sicherung der ersten Anhängerkupplung mit dem Kupplungskopf des Zugfahrzeuges kann bei einem spurversetzen Fahren, also bei einer verschobenen zweiten Anhängerkupplung erfolgen. Befindet sich die erste Anhängerkupplung in einer Mittelstellung, kann auf das mindestens eine Sicherungsmittel verzichtet werden.

Es kann vorgesehen sein, dass die Verbindung zwischen der ersten Anhängerkupplung der hydraulischen Dreipunkt-Hebevorrichtung und dem Kupplungskopf des Zugfahrzeuges zumindest weitgehend spielfrei ausgebildet ist, wodurch ein starrer vierter Verbindungspunkt zwischen dem Trägerrahmen und dem Zugfahrzeug umgesetzt werden kann. Die Verbindung zwischen dem Trägerrahmen und dem Zugfahrzeug bei einer zumindest teilweisen oder abgesenkten hydraulischen Dreipunkt-Hebevorrichtung kann sich weiter dadurch auszeichnen, dass negative Stützlasten aufgenommen werden können.

Eine Weiterbildung der Erfindung kann weiter vorsehen, dass die erste Anhängerkupplung, welche mit dem ersten Anhängepunkt einen vierten Verbindungspunkt ausbildet, entlang des Rahmens höhenverstellbar ausgebildet ist, um die Höhe der Anhängevorrichtung in Bezug auf den Kupplungskopf des Zugfahrzeuges einstellen zu können. Darüber hinaus oder wahlweise kann die erste Anhängerkupplung tiefen- bzw. längenverstellbar ausgebildet sein, wodurch die Entfernung der Anhängevorrichtung zum Zugfahrzeug reguliert und eingestellt werden kann. Vorzugsweise kann die Anhängevorrichtung bzw. dessen Rahmen relativ nah am Zugfahrzeug angeordnet sein, so dass beispielsweise bei Kurvenfahrten eine Kollision des Rahmens mit der Zapfwelle des Zugfahrzeugs aufgrund eines günstigeren Schwenkwinkels verhindert werden kann. Durch die Höhenverstellbarkeit und/oder die Tiefen- bzw. Längenverstellbarkeit kann die Anhängevorrichtung individuell an die jeweiligen Gegebenheiten angepasst und eingestellt werden.

Gemäß einer Weiterbildung der Erfindung kann vorgesehen sein, dass der Trägerrahmen eine Trägerplatte umfasst, auf welcher die zweite Anhängerkupplung fixiert ist. Zwischen dem Trägerrahmen und der Trägerplatte kann eine gleitende Verbindung vorgesehen sein, so dass die Trägerplatte mit der zweiten Anhängerkupplung bei einer Stellbewegung des zumindest einen Stellelements horizontal nach links oder nach rechts entlang der Längserstreckungsrichtung des Trägerrahmens verschiebbar ist. Die Trägerplatte kann unterschiedlich ausgebildet sein. Die Trägerplatte kann einen rechteckigen oder quadratischen Querschnitt umfassen, so dass die Trägerplatte auf den Trägerrahmen aufliegen bzw. von oben eingreifen kann. Wahlweise kann die Trägerplatte eine L-förmige Form aufweisen, wodurch die Trägerplatte eine Schutzfunktion für eine seitliche Fläche des Trägerrahmens einnehmen kann.

Eine Weiterbildung sieht vor, dass das zumindest eine Stellelement als hydraulisch oder pneumatisch wirkender Stellzylinder oder als elektromotorisch wirkender Aktor oder als Spindel ausgebildet ist. Der Aktor kann als Zylinder, vorzugsweise als Teleskopzylinder ausgebildet sein. Die genannten Ausführungsformen des zumindest einen Stellelements sind nicht einschränkend zu verstehen, vielmehr kann das zumindest eine Stellelement durch jegliche weitere im Stand der Technik bekannten Lösungen gebildet werden.

Es kann auch vorgesehen sein, dass der Trägerrahmen zumindest einen Anschlag umfasst. Der zumindest eine Anschlag kann sich an einem Enden des Trägerrahmens befinden. Am zumindest einen Anschlag kann das zumindest eine Stellelemente mittels eines Befestigungsmittels oder mittels mehrerer Befestigungsmittel fixiert werden. Bei dem Befestigungsmittel oder den mehreren Befestigungsmitteln kann es sich um Schraubverbindungen und/oder sonstigen lösbaren Verbindungen handeln, so dass bei Bedarf das zumindest eine Stellelement gewechselt werden kann.

Bei Verwendung von zumindest zwei Stellelementen kann der Trägerrahmen zumindest zwei Anschläge umfassen, welche jeweils an den Enden des Trägerrahmens vorgesehen sind.

Die Erfindung sieht weiter vor, dass das zumindest eine Stellelement mit der Trägerplatte mittels weiterer Befestigungsmittel in Verbindung stehen kann, so dass bei einer Stellbewegung des zumindest einen Stellelements die Trägerplatte mit der zweiten Anhängerkupplung verschiebbar ist. Bei den weiteren Befestigungsmitteln kann es sich um Schraubverbindungen und/oder sonstigen lösbaren Verbindungen handeln.

Es kann auch vorgesehen sein, dass der hydraulischen Dreipunkt-Hebevorrichtung zumindest ein Frontgewicht zugeordnet ist, wobei das zumindest eine Frontgewicht zumindest näherungsweise gegensinnig zur Stellbewegung der zweiten Anhängerkupplung verschiebbar ist, d.h. wiederum in einer Richtung quer zu einer Fahrtrichtung des Zugfahrzeuges sowie entlang einer horizontalen Achse. Die gegensinnige Verschiebung des zumindest einen Frontgewichts kann zumindest weitgehend bzw. annähernd zeitgleich mit der Stellbewegung automatisch erfolgen. Wahlweise kann ein Soll-Wert zur Verschiebung des zumindest einen Frontgewichts manuell vorgegeben werden. Bei einer Verschiebung der zweiten Anhängerkupplung mittels des zumindest einen Stellelements um einen definierten Weg entlang des Trägerrahmens nach rechts kann das Frontgewicht um den gleichen definierten Weg nach links verschoben werden. Ebenso kann bei einer Verschiebung der zweiten Anhängerkupplung des zumindest einen Stellelements um einen definierten Weg entlang des Trägerrahmens nach links das Frontgewicht um den gleichen definierten Weg nach rechts verschoben werden.

Es kann weiterhin vorgesehen sein, dass eine Stellbewegung des zumindest einen Stellelements auf Grundlage eines manuell vorgebbaren Soll-Wertes erzeugbar ist, wobei der manuelle vorgebbare Soll-Wert vom Fahrzeugführer vorgebbar ist. Der manuelle Soll-Wert kann in Abhängigkeit von dem bearbeitenden Bodens, bspw. im Hinblick auf eine Geländeneigung und/oder auf Erfahrungswerten erfolgen.

Wahlweise kann eine Stellbewegung des zumindest einen Stellelements auf Grundlage eines GPS-Signals und/oder von Sensoren oder dergleichen erzeugt werden. Hierzu können dem Zugfahrzeug und/oder dem Trägerrahmen und/oder dem Rahmen und/oder dergleichen Sensoren zugeordnet sein, so dass eine Stellbewegung der Stellelemente automatisch erfolgen kann. Wahlweise kann eine Stellbewegung des zumindest einen Stellelements auf Grundlage eines GPS-Signals oder dergleichen erzeugt werden.

Weiter betrifft die Erfindung ein Verfahren zum Anhängen eines landwirtschaftlichen Arbeitsgeräts, das front- und/oder heckseitig mit einer hydraulischen Dreipunkt-Hebevorrichtung ausgestattet ist. In einem ersten Schritt wird ein Trägerrahmen mit einer ersten Anhängerkupplung und mit einer zweiten Anhängerkupplung bereitgestellt. Der Trägerrahmen kann anschließend so ausgerichtet werden, dass dieser entsprechend vor oder hinter dem Zugfahrzeug und horizontal zur Fahrtrichtung des Zugfahrzeuges positioniert wird. An die zweite Anhängerkupplung kann ein landwirtschaftliches Arbeitsgerät, bspw. in Form eines Anhängers oder eines Güllewagens, Bodenbearbeitungsgerät, Saatguttank, Düngertank, Frontseilwinde oder dergleichen sowie sämtliche weitere im Stand der Technik bekannte Arbeitsgeräte gekuppelt werden.

In einem weiteren Schritt wird der Trägerrahmen über einen Rahmen an die hydraulische Dreipunkt-Hebevorrichtung des Zugfahrzeugs gekoppelt.

In einem nächsten Schritt wird die hydraulische Dreipunkt-Hebevorrichtung leicht angehoben und die erste Anhängerkupplung wird in Bezug auf einen Kupplungskopfes des Zugfahrzeuges ausgerichtet. Der Kupplungskopf des Zugfahrzeuges und die erste Anhängerkupplung können dabei derart zueinander ausgerichtet werden, so dass der Kupplungskopf und die erste Anhängerkupplung zumindest näherungsweise übereinander liegen.

In einem weiteren Schritt wird die hydraulische Dreipunkt-Hebevorrichtung zumindest teilweise oder vollständig abgesenkt, wobei die erste Anhängerkupplung auf den Kupplungskopf des Zugfahrzeuges aufliegen kann, so dass eine rein mechanische Verbindung hergestellt werden kann. Mittels dieser Verbindung kann ein starrer vierter Verbindungspunkt hergestellt werden, ohne hydraulische Elemente der hydraulischen Dreipunkt-Hebevorrichtung zu belasten. Bei einer zumindest teilweisen oder vollständig abgesenkten hydraulischen Dreipunkt-Hebevorrichtung kann die erste Anhängerkupplung den Kupplungskopf des Zugfahrzeuges zumindest vollständig umfassen.

In einem nachfolgenden Schritt erfolgt ein Verschieben der zweiten Anhängerkupplung entlang der Längserstreckungsrichtung des Trägerrahmens. Wahlweise kann die zweite Anhängerkupplung zumindest teilweise und/oder vollständig entlang der Längserstreckungsrichtung des Trägerrahmens verschoben werden, so dass die zweite Anhängerkupplung maximal und/oder teilweise nach links oder nach rechts verschoben werden kann. Mit der zweiten Anhängerkupplung kann das daran angehängte landwirtschaftliche Arbeitsgerät um den gleichen Weg mit verschoben werden, so dass ein spurversetztes Fahren des landwirtschaftlichen Arbeitsgeräts gegenüber dem Zugfahrzeug möglich ist.

Gemäß einer Weiterbildung des Verfahrens kann ein Soll-Wert zum Verschieben der zweiten Anhängerkupplung manuell vorgegeben. Der Soll-Wert kann von einem Fahrzeugführer des Zugfahrzeuges in Abhängigkeit von dem zu bearbeitenden Boden bspw. im Hinblick auf die Geländeneigung und/oder von Erfahrungswerten erfolgen. Wahlweise kann ein Soll-Wert zum Verschieben der zweiten Anhängerkupplung auf Grundlage von sensorischen und/oder GPS-basierten Werten vorgegeben werden.

Es kann vorgesehen sein, dass die Verbindung zwischen dem Kupplungskopf des Zugfahrzeuges und der ersten Anhängerkupplung bei einer abgesenkten hydraulischen Dreipunkt-Hebevorrichtung gesichert werden kann. Aufgrund einer zusätzlichen Sicherung kann die mechanische Verbindung zu jeder Zeit während einer Feldfahrt und/oder dergleichen aufrechterhalten werden kann. Die Sicherung der ersten Anhängerkupplung mit dem Kupplungskopf des Zugfahrzeuges kann bei einem spurversetzen Fahren, also bei einer verschobenen zweiten Anhängerkupplung erfolgen. Befindet sich die erste Anhängerkupplung in einer Mittelstellung, kann auf eine Sicherung verzichtet werden. Eine Weiterbildung sieht vor, dass die Verbindung zwischen dem Kupplungskopf des Zugfahrzeuges und der ersten Anhängerkupplung derart ausgebildet sein kann, dass eine zumindest weitgehend spielfreie Verbindung hergestellt werden kann. Die Verbindung kann somit negative Stützlasten aufnehmen.

Die Erfindung sieht weiter vor, dass ein Frontgewicht gegensinnig zu einer Stellbewegung der zweiten Anhängerkupplung verschoben wird, wodurch Gewichtsausgleichungen erfolgt werden können.

Das erfindungsgemäße Verfahren kann insbesondere mit einer Anhängevorrichtung für ein landwirtschaftliches Zugfahrzeug gemäß einer der zuvor beschriebenen Ausführungsvarianten durchgeführt werden. Es sei zudem an dieser Stelle darauf hingewiesen, dass sich alle zuvor im Zusammenhang mit der erfindungsgemäßen Anhängevorrichtung für ein landwirtschaftliches Zugfahrzeug genannten Aspekte und Ausführungsvarianten gleichermaßen auf das erfindungsgemäße Verfahren beziehen und damit im Zusammenhang stehen können, ohne dass dies gesondert erwähnt sein muss. Gleiches gilt umgekehrt für genannte Verfahrensaspekte, die sich gleichermaßen auf die erfindungsgemäße Anhängevorrichtung für ein landwirtschaftliches Zugfahrzeug beziehen können, ohne dass dies gesondert erwähnt sein muss.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1A zeigt eine schematische Seitenansicht der Anhängevorrichtung an einem Zugfahrzeug.
Fig. 1B zeigt eine schematische Rückansicht des Ausführungsbeispiels gemäß Fig. 1A.
Fig. 2 zeigt in einem Blockdiagramm das erfindungsgemäße Verfahren.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

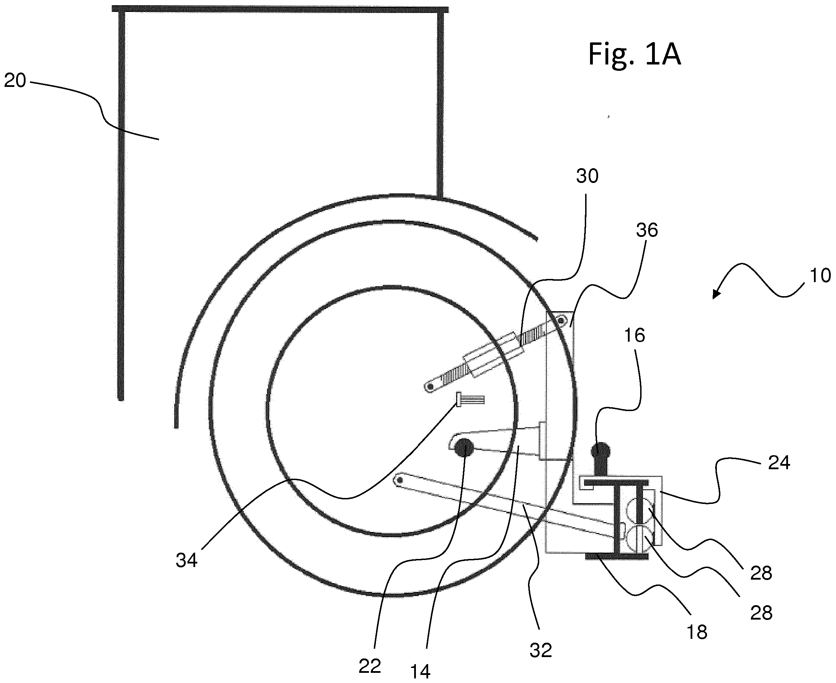

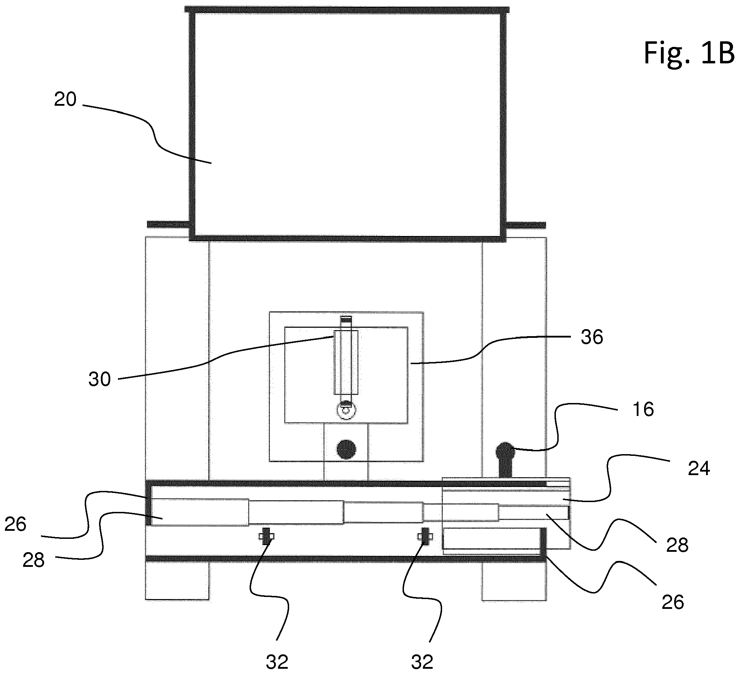

Die Figuren 1A und 1B zeigen die erfindungsgemäße Anhängevorrichtung 10 für ein landwirtschaftliches Zugfahrzeug 20 anhand eines schematisch zu verstehenden Ausführungsbeispiels. An der Rückseite bzw. heckseitig weist das Zugfahrzeug 20 eine hydraulische Dreipunkt-Hebevorrichtung 12 auf. Die hydraulische Dreipunkt-Hebevorrichtung 12 umfasst zwei Unterlenker 32, welche tief am Heck des Zugfahrzeuges in Längsrichtung bzw. in Fahrrichtung angebracht sind, und die um jeweilige Gelenke schwenkbar und damit hebbar und senkbar sind, wobei die Schwenkachsen insbesondere ungefähr horizontal und in etwa quer zu einer Längsrichtung des Zugfahrzeuges 20 verlaufen. Die hydraulische Dreipunkt-Hebevorrichtung 12 weist weiter einen Oberlenker 30 auf, welcher Oberlenker 30 als hydraulischer Zylinder ausgebildet ist. Die Rückseite des Zugfahrzeuges 20 umfasst weiter eine Zapfwelle 34.

An den freien Enden der Unterlenker 32 ist ein Trägerrahmen 18 eingehängt. Der Trägerrahmen 18 ist mit einem Rahmen 36 verbunden, welcher dem Trägerrahmen 18 in Fahrrichtung des Zugfahrzeuges 20 vorgeordnet ist. Der Rahmen 36 weist einen rechteckigen Querschnitt auf. An einer Oberkante des Rahmens 36 greift der Oberlenker 30 an, so dass der Rahmen 36 zentral zum Zugfahrzeug 20 ausgerichtet ist.

An einer Unterkante des Rahmens 36 ist eine erste Anhängerkupplung 14 vorgesehen. Die erste Anhängerkupplung 14 dient dazu, den Trägerrahmen 18 an das Zugfahrzeug 20 zu koppeln. Das Zugfahrzeug 20 umfasst einen herkömmlichen und bekannten Kupplungskopf 22, an welchem die erste Anhängerkupplung 14 eingreift.

Bei einer abgesenkten hydraulischen Dreipunkt-Hebevorrichtung 12 wird eine starre mechanische Verbindung zwischen dem Trägerrahmen 18 und dem Zugfahrzeug 20 ausgebildet. Hierzu kann die erste Anhängerkupplung 12 auf dem Kupplungskopf 22 des Zugfahrzeuges 20 aufliegen und diesen vollständig umfassen. Zwischen dem Kupplungskopf 22 und der ersten Anhängerkupplung 12 entsteht eine zumindest weitgehend spielfreie Verbindung, welche auch last- und/oder druckfrei ausgebildet ist. Die hydraulischen Elemente, insbesondere der Oberlenker 30, der hydraulischen Dreipunkt-Hebevorrichtung 12 werden nicht mehr belastet, d.h. die Kupplung zwischen der ersten Anhängerkupplung 14 und dem Kupplungskopf 22 basiert auf einer rein mechanischen Verbindung. Die mechanische Verbindung kann somit negative Stützlasten aufnehmen, die während einer Feldfahrt oder dergleichen entstehen und auf die Verbindung wirken können.

Es ist mindestens ein Sicherungsmittel (hier nicht dargestellt) vorgesehen, welches die Verbindung zwischen der ersten Anhängerkupplung 14 und den Kupplungskopf 22 des Zugfahrzeuges 24 bei einer abgesenkten hydraulischen Dreipunkt-Hebevorrichtung 12 zusätzlich sichert. Bei dem mindestens einen Sicherungsmittel kann es sich um im Stand der Technik bekannte Lösungen zur Sicherung von Anhängerkupplungen an einem Kupplungskopf handeln. Die Sicherung der ersten Anhängerkupplung 12 mit dem Kupplungskopf 22 des Zugfahrzeuges 24 erfolgt insbesondere bei einem spurversetzten Fahren, also bei einer verschobenen zweiten Anhängerkupplung 16. Befindet sich die erste Anhängerkupplung 12 in einer Mittelstellung, ist eine Sicherung nicht zwangsläufig erforderlich.

Der Trägerrahmen 18 ist gebildet durch einen H-Träger, welcher sich über die Breite des Zugfahrzeuges 20 erstreckt. Der Trägerrahmen 18 ist damit horizontal zur Fahrtrichtung des Zugfahrzeuges 20 ausgerichtet. Innerhalb des Trägerrahmens 18 sind zwei Stellelemente vorgesehen, welche als Teleskopzylinder 28 ausgebildet sind. Die Teleskopzylinder 28 sind liegend aufeinander angeordnet, wobei ein Teleskopzylinder 28 unten und der andere Teleskopzylinder 28 oben positioniert ist. Die Anordnung der Teleskopzylinder 28 erfolgt dabei derart, dass sie gegensinnig zueinander ausgerichtet sind. Die Teleskopzylinder 28 sind mittels hier nicht dargestellten ein oder mehreren Befestigungsmitteln an Anschlägen 26 fixiert, welche Anschläge 26 sich jeweils an den Enden des Trägerrahmens 18 befinden. Die ein oder mehreren Befestigungsmittel können als Schraubverbindungen und/oder in Form von sämtlichen lösbaren Verbindungen ausgebildet sein. Ein Anschlag 26 erstreckt sich von einer oberen Strebe des Trägerrahmens 18 nach unten. Ein weiterer Anschlag 26 erstreckt sich von einer unteren Strebe des Trägerrahmens 18 nach oben.

Die Teleskopzylinder 28 stehen mittels weiterer hier nicht dargestellter Befestigungsmittel mit einer Trägerplatte 24 in Verbindung. Die Trägerplatte 24 ist L-förmig ausgebildet. Die Trägerplatte 24 umgreift den Trägerrahmen 18 von oben, wobei eine gleitende Verbindung ausgebildet wird. Zudem erstreckt sich die Trägerplatte 24 aufgrund der L-förmigen Ausprägung zumindest teilweise über eine seitliche Fläche des Trägerrahmens 18. Damit sind die Teleskopzylinder 28 vor Schmutz und/oder vor äußeren Einwirkungen zumindest weitgehend geschützt. Bei den weiteren Befestigungsmitteln kann es sich um Schraubverbindungen und/oder um sämtliche lösbare Verbindungen handeln.

Auf der Trägerplatte 24 befindet sich eine zweite Anhängerkupplung 16, an welchem ein landwirtschaftliches Arbeitsgerät, insbesondere ein Güllewagen (hier nicht dargestellt), koppelbar ist. Über eine Stellbewegung der Teleskopzylinder 28 ist die Trägerplatte 24 und damit die zweite Anhängerkupplung 16 entlang der Längserstreckungsrichtung des Trägerrahmens 18 verschiebbar. Die Stellbewegung des Teleskopzylinders 28 bewirkt eine Verschiebung der Trägerplatte mit der zweiten Anhängerkupplung 16 nach links oder nach rechts, wobei die Stellbewegung den Verschiebeweg angibt.

Gemäß vorliegendem Ausführungsbeispiel befindet sich der obere Teleskopzylinder 28 in einer vollständig ausgefahrenen Position, so dass die Trägerplatte 24 mit der zweiten Anhängerkupplung 16 maximal nach rechts in Bezug auf den Trägerrahmen 19 verschoben ist. Der untere Teleskopzylinder 28 befindet sich dagegen in einer eingefahrenen Position. Der untere Teleskopzylinder 28 wird erst dann ausgefahren, sofern eine Stellbewegung bzw. Verschiebung der Trägerplatte 24 mit der zweiten Anhängerkupplung 16 nach rechts erforderlich ist.

Die hydraulische Dreipunkt-Hebevorrichtung 12 umfasst zumindest ein Frontgewicht (hier nicht dargestellt), wobei das zumindest eine Frontgewicht zumindest näherungsweise gegensinnig zur Stellbewegung der zweiten Anhängerkupplung 16 verschoben wird. Gemäß vorliegendem Ausführungsbeispiel ist das Frontgewicht maximal nach links verfahren, um eventuelle Gleichgewichtsschwankungen kompensieren zu können.

Die Stellbewegung der Teleskopzylinder 28 erfolgt aufgrund eines manuellen vorgebbaren Wertes, welcher durch den Fahrzeugführer des Zugfahrzeuges 20 vorgegeben wird. Wahlweise kann die Stellbewegung der Teleskopzylinder 28 auf Grundlage von GPS-Daten und/oder auf Sensoren erfolgen.

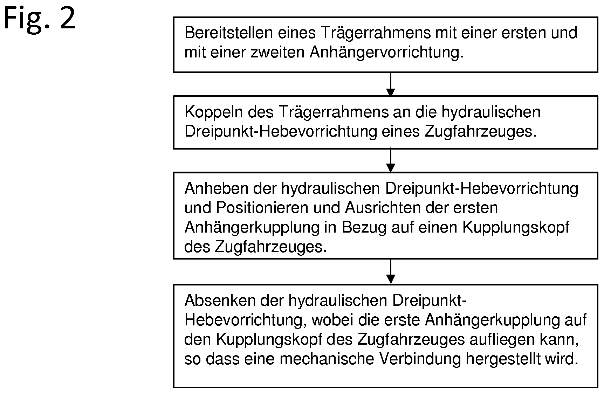

Die Fig. 2 stellt die einzelnen Verfahrensschritte zum Anhängen eines landwirtschaftlichen Arbeitsgeräts an einer Anhängevorrichtung 10, das front- und/oder heckseitig mit einer hydraulischen Dreipunkt-Hebevorrichtung 12 ausgestattet ist, in einem Blockdiagramm dar.

In einem ersten Schritt wird ein Trägerrahmen 18 mit einer ersten und mit einer zweiten Anhängerkupplung 14, 16 bereitgestellt, wobei der Trägerrahmen 18 so auszurichten ist, dass dieser horizontal zur Fahrtrichtung des Zugfahrzeuges 20 positioniert wird. An der zweiten Anhängerkupplung 16 kann beispielsweise ein Anhänger gekuppelt werden.

In einem weiteren Schritt der Trägerrahmen 18 an die hydraulischen Dreipunkt-Hebevorrichtung 12 eines Zugfahrzeugs 20 gekoppelt. Hierzu werden zwei Unterlenker 32 der hydraulischen Dreipunkt-Hebevorrichtung 12 mit dem Trägerrahmen 18 verbunden. Der Oberlenker 30 wird mit einem dem Trägerrahmen 18 zugeordneten und vorgeordneten Rahmen 36 hydraulisch verbunden.

Anschließend wird die hydraulische Dreipunkt-Hebevorrichtung 12 leicht angehoben, so dass die erste Anhängerkupplung14 gegenüber dem Kupplungskopf 22 des Zugfahrzeuges 20 ausgerichtet wird. Die erste Anhängerkupplung 14 und der Kupplungskopf 22 liegen nach dem Ausrichten zumindest näherungsweise übereinander, so dass bei einem Absenken der hydraulischen Dreipunkt-Hebevorrichtung 12 die erste Anhängerkupplung 14 auf den Kupplungskopf 22 des Zugfahrzeuges 20 aufliegen kann. Hierzu umgreift die erste Anhängerkupplung14 den Kupplungskopf 22 des Zugfahrzeuges 20 zumindest weitgehend vollständig.

Es kann eine rein mechanische und starre Verbindung zwischen der ersten Anhängerkupplung14 und dem Kupplungskopf 22 des Zugfahrzeuges 20 gebildet werden, ohne hydraulische Elementen der hydraulischen Dreipunkt-Hebevorrichtung 12 zu belasten. Damit kann durch das Absenken der hydraulischen Dreipunkt-Hebevorrichtung 12 auf den Kupplungskopf 22 des Zugfahrzeuges 20 ein vierter Verbindungspunkt hergestellt werden.

Anschließend erfolgt ein Verschieben der zweiten Anhängerkupplung 16, ggf. mit einem daran angehängten Arbeitsgerät, entlang der Längserstreckungsrichtung des Trägerrahmens 18. Die zweite Anhängerkupplung 16 wird zumindest teilweise und/oder zumindest vollständig entlang Längserstreckungsrichtung des Trägerrahmens 18 verschoben, so dass die zweite Anhängerkupplung 16 maximal und/oder teilweise nach links oder nach rechts verschoben werden kann. Dadurch wird ein spurversetztes Fahren eines an die zweite Anhängerkupplung 16 angehängtes Arbeitsgerät gegenüber dem Zugfahrzeug 20 ermöglicht.

Gegensinnig zur Stellbewegung der zweiten Anhängerkupplung 16 wird ein Frontgewicht zumindest näherungsweise verschoben, wodurch ein Gewichtsausgleich erfolgen kann.

Die hergestellte mechanische Verbindung zwischen dem Kupplungskopf 22 des Zugfahrzeuges 20 und der ersten Anhängerkupplung 14 wird gesichert, so dass die mechanische Verbindung zu jeder Zeit während einer Feldfahrt und/oder dergleichen aufrechterhalten werden kann. Die Sicherung der ersten Anhängerkupplung 12 mit dem Kupplungskopf 22 des Zugfahrzeuges 20 kann bei einem spurversetzen Fahren, also bei einer verschobenen ersten Anhängerkupplung 12 erfolgen. Befindet sich die erste Anhängerkupplung 12 in einer Mittelstellung, kann auf eine Sicherung verzichtet werden.

Die Verbindung zwischen dem Kupplungskopf 22 des Zugfahrzeuges 20 und der ersten Anhängekupplung 14 ist derart ausgebildet, dass eine zumindest weitgehend spielfreie Verbindung hergestellt wird. Die Verbindung kann negative Stützlasten aufnehmen, ohne dass hydraulische Elemente weiterhin belastet werden.

Ein Soll-Wert zum Verschieben der zweiten Anhängerkupplung 16 wird manuell vorgegeben. Die Vorgabe des Soll-Wertes hängt von mehreren Faktoren, bspw. Geländeneigung des zu bearbeitenden Bodens und/oder von Erfahrungswerten des Fahrzeugführers ab. Wahlweise kann ein Soll-Wert zum Verschieben der zweiten Anhängerkupplung auf Grundlage von sensorischen und/oder GPS-basierten Werten vorgegeben werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Anhängevorrichtung
- 12: Hydraulische Dreipunkt-Hebevorrichtung
- 14: Erste Anhängerkupplung
- 16: Zweite Anhängerkupplung
- 18: Trägerrahmen
- 20: Zugfahrzeug
- 22: Kupplungskopf
- 24: Trägerplatte
- 26: Anschlag
- 28: Zylinder
- 30: Oberlenker
- 32: Unterlenker
- 34: Zapfwelle
- 36: Rahmen

## Patentansprüche

1. Anhängevorrichtung (10) für ein landwirtschaftliches Zugfahrzeug (20), das front-und/oder heckseitig mit einer hydraulischen Dreipunkt-Hebevorrichtung (12) ausgestattet ist, wobei die Anhängevorrichtung (10) zumindest umfasst:
- eine erste Anhängerkupplung (14), welche einen Trägerrahmen (18) weitgehend starr frontseitig oder heckseitig an das Zugfahrzeug (20) koppelt,
- eine dem Trägerrahmen (18) zugeordnete zweite Anhängerkupplung (16) für ein Arbeitsgerät bzw. zur lösbaren Koppelung eines Arbeitsgerätes, welche zweite Anhängerkupplung (16) mittels zumindest eines Stellelements gegenüber dem Zugfahrzeug (20) zumindest teilweise entlang einer Längserstreckungsrichtung des Trägerrahmens (18) und/oder quer zu einer Fahrtrichtung des Zugfahrzeuges (20) relativ verschiebbar ist,
und wobei bei einer zumindest teilweisen oder vollständig abgesenkten frontseitigen oder heckseitigen hydraulischen Dreipunkt-Hebevorrichtung (12) des Zugfahrzeuges (20) eine mechanische Verbindung zwischen der ersten Anhängerkupplung (14) und dem Zugfahrzeug (20) ausgebildet wird.

2. Anhängevorrichtung nach Anspruch 1, wobei die erste Anhängerkupplung (14) bei einer zumindest teilweisen oder vollständig abgesenkten hydraulischen Dreipunkt-Hebevorrichtung (12) auf einem Kupplungskopf (22) oder einem anderen Koppelpunkt des Zugfahrzeugs (20) aufliegt.

3. Anhängevorrichtung nach Anspruch 2, wobei die Verbindung zwischen der ersten Anhängerkupplung (14) der hydraulischen Dreipunkt-Hebevorrichtung (12) und dem Kupplungskopf (22) des Zugfahrzeuges (20) zumindest weitgehend spielfrei ausgebildet ist.

4. Anhängevorrichtung nach einem der Ansprüche 1 bis 3, wobei der Trägerrahmen (18) eine Trägerplatte (24) umfasst, auf welcher die zweite Anhängerkupplung (16) fixiert ist.

5. Anhängevorrichtung nach einem der vorherigen Ansprüche, wobei eine Gleitverbindung zwischen dem Trägerrahmen (18) und der Trägerplatte (24) ausgebildet wird.

6. Anhängevorrichtung nach einem der vorherigen Ansprüche, wobei das zumindest eine Stellelement als hydraulisch oder pneumatisch oder elektromotorisch wirkender Aktor oder als Spindel oder dergleichen ausgebildet ist.

7. Anhängevorrichtung nach einem der vorherigen Ansprüche, wobei der Trägerrahmen (18) zumindest einen Anschlag (26) umfasst, an welchem das mindestens eine Stellelement fixiert ist.

8. Anhängevorrichtung nach einem der vorherigen Ansprüche, wobei der hydraulischen Dreipunkt-Hebevorrichtung (12) und/oder dem Zugfahrzeug (20) bei heckseitig angekoppelter Anhängevorrichtung (10) zumindest ein Frontgewicht zugeordnet ist.

9. Anhängevorrichtung nach Anspruch 8, wobei das zumindest eine Frontgewicht zumindest näherungsweise gegensinnig zur Stellbewegung der zweiten Anhängerkupplung (16), insbesondere in einer horizontalen Richtung quer zu einer Fahrtrichtung des Zugfahrzeuges (20) verschiebbar ist.

10. Anhängevorrichtung nach einem der vorherigen Ansprüche, wobei eine Stellbewegung des zumindest einen Stellelements auf Grundlage eines manuell vorgebbaren Soll-Wertes erzeugbar ist.

11. Anhängevorrichtung nach einem der vorherigen Ansprüche, wobei eine Stellbewegung des zumindest einen Stellelements auf Grundlage eines GPS-Signals und/oder von Sensoren oder dergleichen erzeugbar ist.

12. Verfahren zum Anhängen eines landwirtschaftlichen Arbeitsgeräts an ein Zugfahrzeug (20), das front- und/oder heckseitig mit einer hydraulischen Dreipunkt-Hebevorrichtung (12) ausgestattet ist, umfassend folgende Schritte:
- Bereitstellen eines Trägerrahmens (18) mit einer ersten Anhängerkupplung (14) und mit einer zweiten Anhängekupplung (16),
- Koppeln des Trägerrahmens (18) an die hydraulischen Dreipunkt-Hebevorrichtung (12) eines Zugfahrzeuges (20),
- Anheben der hydraulischen Dreipunkt-Hebevorrichtung (12) und Ausrichten der ersten Anhängerkupplung(14) in Bezug auf einen Kupplungskopf (22) des Zugfahrzeuges (20),
- zumindest teilweise oder vollständiges Absenken der hydraulischen Dreipunkt-Hebevorrichtung (12), wobei die erste Anhängerkupplung (14) auf den Kupplungskopf (22) des Zugfahrzeuges (22) aufliegen kann, so dass eine mechanische Verbindung hergestellt wird.

13. Verfahren nach Anspruch 12, wobei die zweite Anhängerkupplung (16) entlang der Längserstreckungsrichtung des Trägerrahmens (18) verschoben werden kann.

14. Verfahren nach Anspruch 12 oder 13, wobei ein Soll-Wert zum Verschieben der zweiten Anhängerkupplung (16) manuell oder auf Grundlage von sensorischen und/oder GPS-basierten Werten vorgegeben wird.

15. Verfahren nach einem der Ansprüche 12 bis 14, das mit einer Anhängevorrichtung (10) für ein landwirtschaftliches Zugfahrzeug (20) gemäß einem der Ansprüche 1 bis 11 durchgeführt wird.
